# EUROPÄISCHE PATENTANMELDUNG

(11) **EP 4 335 272 A1**
(43) Veröffentlichungstag der Anmeldung: **13.03.2024**
(21) Anmeldenummer: 23401035.3
(22) Anmeldetag: 30.08.2023
(51) Int. Cl.: A01C 7/06, A01C 5/06

(54) **SÄMASCHINE ZUM AUSBRINGEN VON KÖRNIGEM FÖRDERGUT**

(30) Priorität: 09.09.2022 DE 102022122931
(71) Anmelder: Amazonen-Werke H. Dreyer SE & Co. KG, 49205 Hasbergen (DE)
(72) Erfinder: Wien, Thomas, 28816 Stuhr (DE); Radeke, Jan Philipp, 27211 Bassum (DE)

(57) **Zusammenfassung**

Die Erfindung betrifft eine Sämaschine (1) zum Ausbringen von körnigem Fördergut, wobei die Sämaschine (1) folgende Bestandteile aufweist:
- ein erstes Schar (2) zum Bilden einer Furche und zum Einbringen von körnigem Fördergut in einen Ackerboden,
- wenigstens eine Andruckrolle (3, 4) zum Schließen der gebildeten Furche, und
- eine erste Steuereinrichtung (5) zum Verteilen von körnigem Fördergut aus einem ersten Vorratsbehälter (6) der Sämaschine (1) an das erste Schar (2) und an die wenigstens eine Andruckrolle (3, 4).

## Beschreibung

Die Erfindung betrifft eine Sämaschine, wie z. B. eine Einzelkorn-Sämaschine, zum Ausbringen von körnigem Fördergut.

Eine Sämaschine dient zur Ausbringung von körnigem Fördergut. Neben Saatgut kann auch alternativ oder zusätzlich Dünger ausgebracht werden.

So umfasst eine bekannte Sämaschine (wie z. B. aus der WO 2020/035340 A1) ein Düngerschar zum Bilden einer Düngerfurche und zum Einbringen von Dünger in einen Ackerboden sowie ein Säschar zum Bilden einer Säfurche und zum Einbringen von Saat in den Ackerboden.

Hierbei bringt die Sämaschine die Saat am Säschar und den Dünger am Düngerschar aus, wobei der Dünger in Arbeitsrichtung der Sämaschine vor oder hinter Andruckrollen zum Schließen der gebildeten Säfurche ausgebracht werden kann. Der Ort des Ausbringens ist abhängig von der Art der Düngung. So wird beispielsweise Schneckenkorn hinter den Andruckrollen lediglich auf den Ackerboden abgelegt, während z. B. Mikronährstoffe vor den Andruckrollen in den Ackerboden eingebracht werden.

Um jedoch unterschiedlichste Dünger und unterschiedlichste Saaten mit ein und derselben Sämaschine auszubringen, verlangt der Markt nach Sämaschinen mit großer Variabilität, eben hinsichtlich Dünger und Saat.

Vor diesem Hintergrund ist es Aufgabe der vorliegenden Erfindung, eine Sämaschine, wie z. B. eine Einzelkorn-Sämaschine, anzugeben, welche kostengünstig herstellbar ist sowie eine große Variabilität hinsichtlich des Ausbringens von Saat und Dünger auf und in einen Ackerboden aufweist, um eine hohe Anzahl an Saat-und-Dünger-Kombinationen für die Ausbringung zu gewährleisten.

Diese Aufgabe wird erfindungsgemäß durch die Merkmale des unabhängigen Patentanspruchs gelöst. Weitere vorteilhafte Weiterbildungen sind Gegenstand der Unteransprüche.

Die vorliegende Erfindung umfasst eine Sämaschine, wie eine Einzelkorn-Sämaschine, zum Ausbringen von körnigem Fördergut.

Diese weist ein erstes Schar, beispielsweise ein Düngerschar, zum Bilden einer Furche, wie z. B. einer Düngerfurche, und zum Einbringen von körnigem Fördergut, wie Dünger, in einen Ackerboden auf.

Ferner weist die Sämaschine wenigstens eine Andruckrolle zum Schließen der gebildeten Furche auf. Dabei kann das erste Schar in Arbeitsrichtung der Sämaschine vor der wenigstens einen Andruckrolle angeordnet sein. Ferner kann die Sämaschine zwei Andruckrollen aufweisen, die V-förmig zueinander angestellt sein können.

Außerdem umfasst die Sämaschine eine erste Steuereinrichtung zum Verteilen von körnigem Fördergut aus einem ersten Vorratsbehälter der Sämaschine an das erste Schar und an die wenigstens eine Andruckrolle. Hierbei kann die wenigstens eine Andruckrolle in Arbeitsrichtung hinter dem ersten Schar und/oder hinter einem ersten Vorratsbehälter der Sämaschine angeordnet sein. Dies hat den Vorteil, dass aus einem ersten Vorratsbehälter der Sämaschine, der größer ausgebildet sein kann als ein zweiter oder dritter Vorratsbehälter der Sämaschine, nicht nur Fördergut an das erste Schar bzw. an das Düngerschar gefördert werden kann, sondern das körnige Fördergut kann auch aus dem ersten Vorratsbehälter der Sämaschine an die wenigstens eine Andruckrolle verteilt oder gefördert werden. Somit weist eine solche Sämaschine ein breiteres Aufgabenspektrum hinsichtlich des Ausbringens von Saat und Dünger in oder auf einen Ackerboden auf. Ferner kann somit eine hohe Anzahl an möglichen Saat-und-Dünger-Kombinationen für die Ausbringung in oder auf Ackerboden abgedeckt und der Anwendungsbereich der Sämaschine erweitert werden.

Bei der Arbeitsrichtung kann es sich um die Richtung handeln, in welche die Sämaschine bewegt wird, um ihre Aufgabe zu erfüllen.

Des Weiteren kann die erste Steuereinrichtung eingerichtet und ausgebildet sein, einen ersten Anteil an körnigem Fördergut an das erste Schar und einen zweiten Anteil an körnigem Fördergut an die wenigstens eine Andruckrolle zu verteilen.

Dabei kann der erste Anteil zwischen 0 und 100 Prozent der maximal zur Verfügung gestellten Menge an körnigem Fördergut betragen, die mit einer ersten Entnahmeleitung aus einem ersten Vorratsbehälter der Sämaschine gefördert werden kann.

Auch kann der zweite Anteil zwischen 0 und 100 Prozent der maximal zur Verfügung gestellten Menge an körnigem Fördergut betragen, die mit einer ersten Entnahmeleitung aus einem ersten Vorratsbehälter der Sämaschine gefördert werden kann.

Hierbei kann sich der erste und zweite Anteil zu 100 Prozent der maximal zur Verfügung gestellten Menge an körnigem Fördergut summieren, die mit einer ersten Entnahmeleitung aus einem ersten Vorratsbehälter der Sämaschine gefördert werden kann.

Die angegebenen Anteile können auch den Wert 0 und 100 Prozent umfassen.

Ferner kann die erste Steuereinrichtung so eingerichtet und ausgebildet sein, dass der erste und zweite Anteil an körnigem Fördergut werkzeuglos und/oder und per Hand einstellbar sind.

Außerdem kann die erste Steuereinrichtung einen Einlass und zwei Auslässe aufweisen. Der Einlass kann dabei mit einer ersten Entnahmeleitung der Sämaschine verbindbar sein. Ein erster Auslass kann mit dem ersten Schar und ein zweiter Auslass mit der wenigstens einen Andruckrolle verbunden sein. Somit kann die Steuereinrichtung Fördergut von dem Einlass auf die zwei Auslässe verteilen.

Ferner kann die erste Steuereinrichtung eine Steuereinheit aufweisen, mit welcher ein erster Anteil an körnigem Fördergut an das erste Schar und ein zweiter Anteil an körnigem Fördergut an die wenigstens eine Andruckrolle verteilbar ist.

Zudem kann die Steuereinheit als Klappe ausgebildet sein, die die zwei Auslässe teilweise öffnen und teilweise schließen kann, sowie einen Auslass vollständig verschlie-ßen und den anderen Auslass vollständig öffnen kann. Dabei kann sowohl der eine Auslass als auch der andere Auslass vollständig geschlossen und vollständig geöffnet werden. Somit ist Fördergut in unterschiedlichen Anteilen auf die Auslässe verteilbar.

Auch kann vorgesehen sein, dass die erste Steuereinrichtung eine Stelleinheit umfasst, mit welcher die Steuereinheit stufenlos verstellbar ist. Somit ist körniges Fördergut auf zwei Auslässe der Steuereinrichtung verteilbar. Hierbei kann die Stelleinheit als elektrischer Motor ausgebildet sein.

Ferner ist es möglich, dass die erste Steuereinrichtung als steuerbare Y-Weiche ausgebildet ist.

Des Weiteren kann die Sämaschine eine Ausgabeeinrichtung zum Ausgeben von körnigem Fördergut an die wenigstens eine Andruckrolle aufweisen.

Die Ausgabeeinrichtung kann eingerichtet und ausgebildet sein, körniges Fördergut an einem Abgabepunkt auszugeben, der in Arbeitsrichtung der Sämaschine vor oder hinter der wenigstens eine Andruckrolle angeordnet ist.

Zudem kann die Ausgabeeinrichtung eine Führung aufweisen, innerhalb welcher körniges Fördergut zu einem Abgabepunkt führbar ist. Die Führung kann als Rohr ausgebildet sein. Ein erstes Ende der Führung kann fluidkommunizierend mit einer zweiten Förderleitung der Sämaschine verbunden sein. Ein zweites Ende der Führung kann einen Abgabepunkt bilden, welcher körniges Fördergut an den Ackerboden abgibt.

Außerdem kann die Ausgabeeinrichtung eingerichtet und ausgebildet sein, körniges Fördergut in Arbeitsrichtung der Sämaschine vor der wenigstens einen Andruckrolle oder in Arbeitsrichtung der Sämaschine hinter der wenigstens einen Andruckrolle auszubringen.

Zusätzlich oder alternativ ist es möglich, dass die Ausgabeeinrichtung veränderbar oder drehbar ausgebildet ist, um einen Abgabepunkt für körniges Fördergut von einer Position in Arbeitsrichtung der Sämaschine vor der wenigstens einen Andruckrolle auf eine Position in Arbeitsrichtung der Sämaschine hinter die wenigstens eine Andruckrolle oder umgekehrt zu verändern.

Des Weiteren kann die Ausgabeeinrichtung einen Luftabscheider umfassen, um einen Luftstrom aus einer Fördergutströmung zumindest teilweise abzutrennen. Eine Fördergutströmung kann Luft und Fördergut, wie Saatgut und/oder Dünger, umfassen.

Der Luftabscheider kann zwischen einer Führung der Ausgabeeinrichtung und einer zweiten Förderleitung der Sämaschine angeordnet sein.

Außerdem kann der Luftabscheider als Zyklon-Abscheider mit einem Eingang und zwei Ausgängen ausgebildet sein. Hierbei kann ein Ausgang abgetrennte Luft ausleiten und ein anderer Ausgang körniges Fördergut in eine Führung der Ausgabeeinrichtung abführen, wobei der Eingang eine Fördergutströmung in den Luftabscheider führen kann, und zwar beispielsweise aus einer zweiten Förderleitung der Sämaschine.

Des Weiteren kann die Sämaschine eine erste Förderleitung für körniges Fördergut, wie Dünger, mit einem ersten Eingang und einem ersten Ausgang aufweisen. Der erste Eingang der ersten Förderleitung kann an der ersten Steuereinrichtung oder an einem ersten Auslass der ersten Steuereinrichtung angeordnet sein. Der erste Ausgang der ersten Förderleitung kann am ersten Schar angeordnet sein, um körniges Fördergut, wie Dünger, aus einem ersten Vorratsbehälter der Sämaschine zum ersten Schar zu führen, sodass körniges Fördergut in einen Ackerboden einbringbar ist.

Ferner kann die Sämaschine eine zweite Förderleitung mit einem zweiten Eingang und einem zweiten Ausgang aufweisen. Der zweite Eingang der zweiten Förderleitung kann an der ersten Steuereinrichtung oder an einem zweiten Auslass der ersten Steuereinrichtung angeordnet sein. Der zweite Ausgang der zweiten Förderleitung kann an einer Ausgabeeinrichtung der Sämaschine angeordnet sein. Dadurch kann über die Ausgabeeinrichtung körniges Fördergut, wie Dünger, aus einem ersten Vorratsbehälter der Sämaschine zur wenigstens einen Andruckrolle geführt werden. Somit ist körniges Fördergut in einen Ackerboden einbringbar oder auf einen Ackerboden ablegbar.

Außerdem kann die Sämaschine eine zweite Steuereinrichtung zum Abgeben von körnigem Fördergut aus einem zweiten Vorratsbehälter der Sämaschine an die wenigstens eine Andruckrolle aufweisen.

Die zweite Steuereinrichtung kann eingerichtet und ausgebildet sein, einen dritten Anteil an körnigem Fördergut an eine Ausgabeeinrichtung der Sämaschine zu verteilen.

Alternativ oder ergänzend kann die zweite Steuereinrichtung eingerichtet und ausgebildet sein, einen vierten Anteil an körnigem Fördergut an die wenigstens eine Andruckrolle zu verteilen.

Der dritte Anteil kann zwischen 0 und 100 Prozent der maximal zur Verfügung gestellten Menge an körnigem Fördergut betragen, die mit einer zweiten Entnahmeleitung der Sämaschine aus einem zweiten Vorratsbehälter der Sämaschine gefördert werden kann.

Der vierte Anteil kann zwischen 0 und 100 Prozent der maximal zur Verfügung gestellten Menge an körnigem Fördergut betragen, die mit einer zweiten Entnahmeleitung der Sämaschine aus einem zweiten Vorratsbehälter der Sämaschine gefördert werden kann.

Hierbei kann sich der dritte und vierte Anteil zu 100 Prozent der maximal zur Verfügung gestellten Menge an körnigem Fördergut summieren, die von einer zweiten Entnahmeleitung der Sämaschine aus einem zweiten Vorratsbehälter der Sämaschine gefördert werden kann.

Die angegebenen Anteile können auch den Wert 0 und 100 Prozent umfassen.

Ferner kann die zweite Steuereinrichtung so eingerichtet und ausgebildet sein, dass die dritten und/oder vierten Anteile an körnigem Fördergut werkzeuglos und/oder und per Hand einstellbar sind.

Außerdem kann die zweite Steuereinrichtung einen Einlass und zwei Auslässe aufweisen. Der Einlass kann mit einer zweiten Entnahmeleitung der Sämaschine verbindbar sein. Ein erster Auslass der zweiten Steuereinrichtung kann mit einer Ausgabeeinrichtung der Sämaschine und ein zweiter Auslass mit der wenigstens einen Andruckrolle verbunden sein.

Die zweite Steuereinrichtung kann zudem eine Steuereinheit aufweisen, mit welcher ein dritter Anteil an körnigem Fördergut an eine Ausgabeeinrichtung der Sämaschine und ein vierter Anteil an körnigem Fördergut an die wenigstens eine Andruckrolle ausgebbar ist.

Auch kann die zweite Steuereinrichtung eine Steuereinheit aufweisen, mit welcher ein dritter und vierter Anteil an körnigem Fördergut an die wenigstens eine Andruckrolle ausgebbar ist. Somit kann der dritte Anteil beispielsweise in Arbeitsrichtung der Sämaschine vor die wenigstens eine Andruckrolle und der vierte Anteil in Arbeitsrichtung der Sämaschine hinter die wenigstens eine Andruckrolle ausgebracht werden.

Ferner kann die Steuereinheit als Klappe ausgebildet sein, die die zwei Auslässe teilweise öffnen und teilweise schließen kann, sowie einen Auslass vollständig verschlie-ßen und den anderen Auslass vollständig öffnen kann. Dabei kann sowohl der eine Auslass als auch der andere Auslass vollständig geschlossen und vollständig geöffnet werden. Somit ist Fördergut in unterschiedlichen Anteilen auf die Auslässe verteilbar.

Auch kann vorgesehen sein, dass die zweite Steuereinrichtung eine Stelleinheit umfasst, mit welcher die Steuereinheit stufenlos verstellbar ist, sodass körniges Fördergut auf zwei Auslässe der zweiten Steuereinrichtung verteilbar ist. Die Stelleinheit kann als elektrischer Motor ausgebildet sein. Ferner kann die zweite Steuereinrichtung als steuerbare Y-Weiche ausgebildet sein.

Des Weiteren kann die Sämaschine einen ersten Vorratsbehälter für körniges Fördergut, wie Mineraldünger, aufweisen. Der erste Vorratsbehälter kann in Arbeitsrichtung der Sämaschine vor und/oder oberhalb des ersten Schars angeordnet sein.

Auch ist es möglich, dass die Sämaschine eine erste Dosiereinrichtung zum dosierten Ausleiten von körnigem Fördergut aus dem ersten Vorratsbehälter in eine erste Entnahmeleitung der Sämaschine umfasst.

Zudem kann die Sämaschine eine erste Entnahmeleitung aufweisen, die mit einem ersten Vorratsbehälter der Sämaschine verbindbar ist.

Ferner kann die Sämaschine eine zweite Entnahmeleitung umfassen, die mit einem zweiten Vorratsbehälter der Sämaschine verbindbar ist.

Dabei dient eine Entnahmeleitung dem Entnehmen des Inhalts eines Vorratsbehälters. Eine Entnahmeleitung kann von einer Leitung, wie einem Schlauch, oder beispielsweise von einer bloßen Verbindung gebildet werden, bei der z. B. eine Steuereinrichtung direkt oder unmittelbar an einem Vorratsbehälter angeordnet oder befestigt ist. Somit sind die Steuereinrichtung und der Vorratsbehälter derart miteinander verbindbar, dass körniges Fördergut von dem Vorratsbehälter in die Steuereinrichtung gelangen kann, ohne dass ein Zwischenstück oder Zwischenteil, wie einen Schlauch, benötigt wird.

Außerdem kann die Sämaschine einen zweiten Vorratsbehälter für Mikrogranulat, wie z. B. Mikronährstoffe, Insektizide und Schneckenkorn, aufweisen. Der zweite Vorratsbehälter kann in Arbeitsrichtung der Sämaschine vor und/oder oberhalb der wenigstens einen Andruckrolle angeordnet sein.

So kann die Sämaschine auch eine zweite Dosiereinrichtung zum dosierten Ausleiten von körnigem Fördergut aus dem zweiten Vorratsbehälter aufweisen.

Des Weiteren kann die Sämaschine ein zweites Schar, wie z. B. ein Säschar, zum Bilden einer Furche, wie einer Säfurche, und zum Einbringen von körnigem Fördergut, wie Saatgut, in einen Ackerboden aufweisen. Das zweite Schar kann in Arbeitsrichtung der Sämaschine hinter dem ersten Schar angeordnet sein. Oberhalb des zweiten Schars kann ein dritter Vorratsbehälter für Saatgut angeordnet sein, dessen Inhalt an das zweite Schar förderbar ist. Vorzugsweise ist die wenigstens eine Andruckrolle dem zweiten Schar, insbesondere der durch das zweite Schar gebildeten Furche, zugeordnet.

Zudem kann die Sämaschine wenigstens eine Tragrolle, eine Fangrolle und/oder einen Scheibenzustreicher umfassen. Der Scheibenzustreicher kann über ein Verbindungsgestell an der Sämaschine angebunden sein.

Dabei kann in Arbeitsrichtung der Sämaschine zumindest teilweise hinter und/oder zumindest teilweise neben dem zweiten Schar die Tragrolle angeordnet sein.

Zudem kann in Arbeitsrichtung der Sämaschine hinter der Tragrolle die Fangrolle angeordnet sein.

Auch ist es möglich, dass in Arbeitsrichtung der Sämaschine hinter der Fangrolle der Scheibenzustreicher angeordnet ist.

Außerdem kann in Arbeitsrichtung der Sämaschine hinter dem Scheibenzustreicher oder hinter der Fangrolle die wenigstens einen Andruckrolle angeordnet sein.

Nachstehend wird die Erfindung anhand eines Ausführungsbeispiels in Verbindung mit zugehörigen Zeichnungen näher erläutert. Hierbei zeigen schematisch:
- Fig. 1: eine perspektivische Ansicht auf eine Sämaschine;
- Fig. 2: eine Seitenansicht auf die Sämaschine aus Figur 1 ;
- Fig. 3: eine Ansicht ähnlich wie Figur 2, jedoch mit geschnitten dargestellter erster Steuereinrichtung;
- Fig. 4: eine Ansicht ähnlich wie Figur 2, jedoch mit geschnitten dargestellter zweiter Steuereinrichtung;
- Fig. 5 und 6: eine Gegenüberstellung zweier Varianten der Sämaschine aus Figuren 1 bis 4 betreffend die Ausgabeeinrichtung der Sämaschine; und
- Fig. 7 und 8: ein weiteres Ausführungsbeispiel der Sämaschine aus den Figuren 1 bis 4, ebenfalls in Gegenüberstellung zweier Varianten betreffend die Ausgabeeinrichtung.

In der nachfolgenden Beschreibung werden gleiche Bezugszeichen für gleiche Gegenstände verwendet.

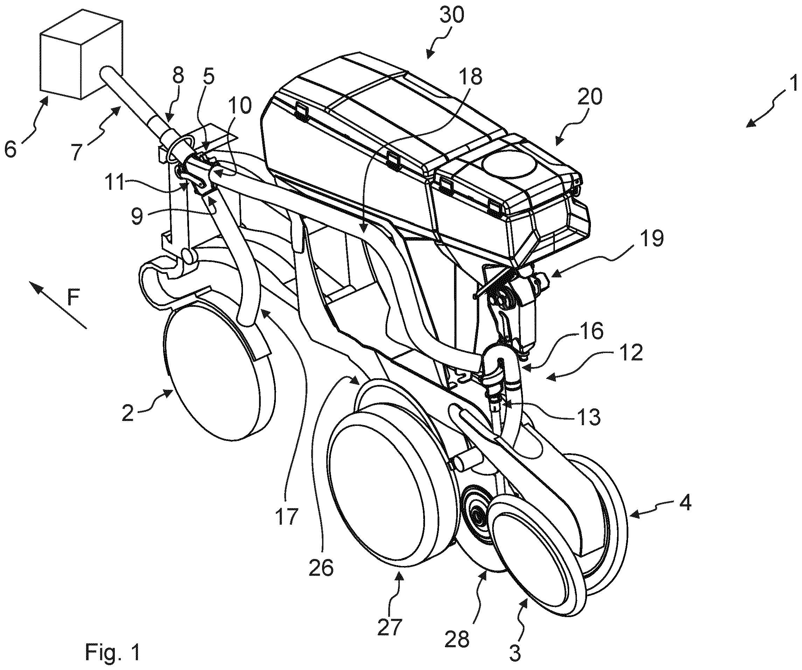

Der Einfachheit und Kürze wegen werden nachstehend die Figuren 1 bis 4 sowie 5 bis 8 zusammen beschrieben, wobei betreffend sondere Merkmale auf die jeweiligen Figuren hingewiesen wird.

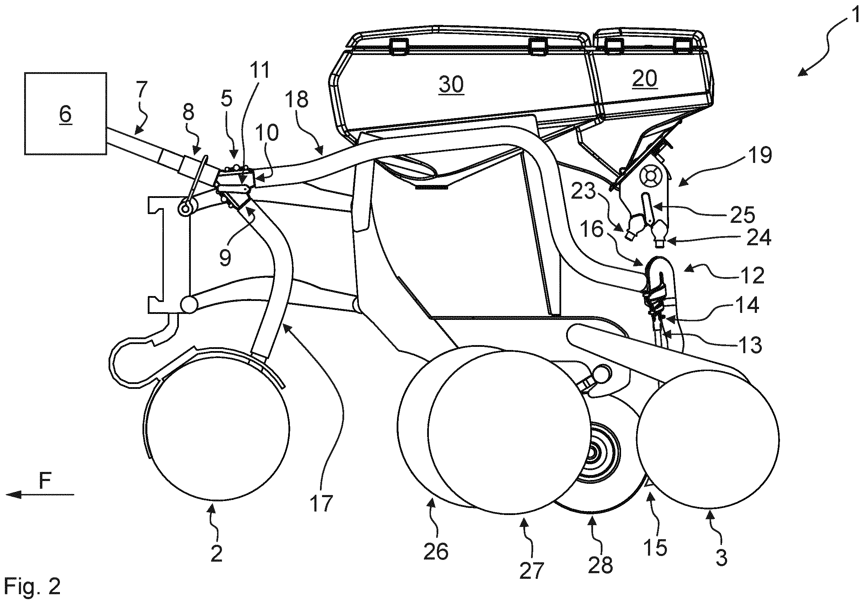

Figur 1 zeigt eine perspektivische Ansicht auf eine Sämaschine 1, wobei Figur 2 eine Seitenansicht auf die Sämaschine 1 aus Figur 1 darstellt.

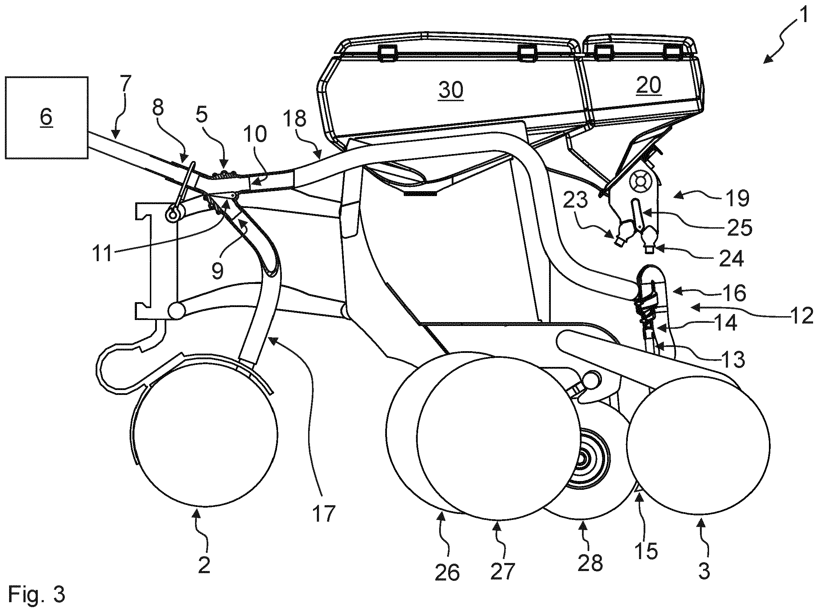

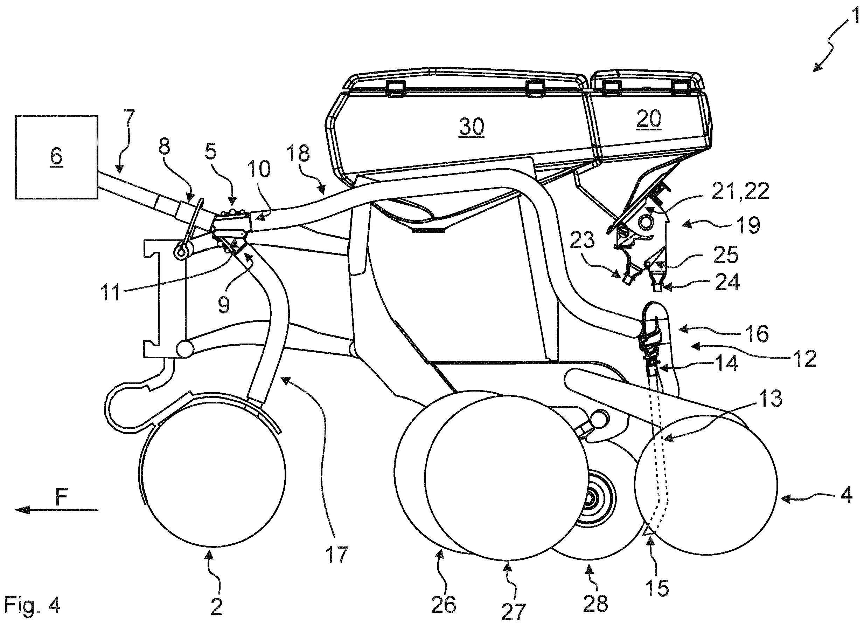

Figur 3 zeigt eine Ansicht ähnlich wie Figur 2, jedoch mit geschnitten dargestellter erster Steuereinrichtung 5 und Figur 4 eine Ansicht ebenfalls ähnlich wie Figur 2, jedoch mit geschnitten dargestellter zweiter Steuereinrichtung 19.

Genauer dargestellt zeigen Figuren 1 bis 4 eine Sämaschine 1, wie beispielsweise eine Einzelkorn-Sämaschine, zum Ausbringen von körnigem Fördergut. Eine Einzelkorn-Sämaschine kann mehrere der als Sämaschine 1 beschriebenen Aggregate umfassen, wobei diese quer zur Fahrtrichtung F nebeneinander angeordnet sind.

Dabei hat die Sämaschine 1 ein erstes Schar 2 zum Bilden einer Furche und zum Einbringen von körnigem Fördergut in einen Ackerboden sowie zwei Andruckrollen 3, 4 zum Schließen gebildeter Furchen. Wie zu erkennen ist das erste Schar 2 in Arbeitsrichtung F vor den Andruckrollen 3, 4 angeordnet, die V-förmig zueinander angestellt sind.

Des Weiteren hat die Sämaschine 1 eine erste Steuereinrichtung 5 zum Verteilen von körnigem Fördergut aus einem ersten Vorratsbehälter 6 der Sämaschine 1 an das erste Schar 2 und an die Andruckrollen 3, 4. Dabei sind die Andruckrollen 3, 4 in Arbeitsrichtung F der Sämaschine 1 hinter dem ersten Schar 2 und hinter dem ersten Vorratsbehälter 6 angeordnet.

Dies hat den Vorteil, dass aus dem ersten Vorratsbehälter 6 der Sämaschine 1, der größer ausgebildet sein kann als ein zweiter 20 oder dritter Vorratsbehälter 30 der Sämaschine 1, nicht nur Fördergut an das erste Schar 2 bzw. an das Düngerschar gefördert werden kann, sondern das körnige Fördergut kann aus dem ersten Vorratsbehälter 6 auch an die Andruckrollen 3, 4 verteilt bzw. gefördert werden, wo es in eine von einem zweiten Schar 26 gebildete Furche anstelle einer von dem ersten Schar 2 gebildeten Furche gelangt. Somit weist die vorgestellte Sämaschine 1 ein breiteres Aufgabenspektrum hinsichtlich des Ausbringens von Saat und Dünger in einen Ackerboden auf. Folglich kann hohe Anzahl an möglichen Saat-und-Dünger-Kombinationen für die Ausbringung auf Ackerboden abgedeckt und der Anwendungsbereich der Sämaschine 1 erweitert werden.

Figuren 1 bis 4 zeigen, dass die erste Steuereinrichtung 5 eingerichtet und ausgebildet ist, einen ersten Anteil an körnigem Fördergut an das erste Schar 2 und einen zweiten Anteil an körnigem Fördergut an die Andruckrollen 3, 4 zu verteilen. Genau genommen ist die erste Steuereinrichtung 5 als steuerbare Y-Weiche ausgebildet.

Dabei kann der erste Anteil zwischen 0 und 100 Prozent der maximal zur Verfügung gestellten Menge an körnigem Fördergut betragen, die mit einer ersten Entnahmeleitung 7 aus dem ersten Vorratsbehälter 6 der Sämaschine 1 gefördert wird.

Der zweite Anteil kann zwischen 0 und 100 Prozent der maximal zur Verfügung gestellten Menge an körnigem Fördergut betragen, die mit der ersten Entnahmeleitung 7 aus dem ersten Vorratsbehälter 6 der Sämaschine 1 gefördert wird.

Hierbei summieren sich der erste und zweite Anteil zu 100 Prozent der maximal zur Verfügung gestellten Menge an körnigem Fördergut, die mit einer ersten Entnahmeleitung 7 aus dem ersten Vorratsbehälter 6 der Sämaschine 1 gefördert wird.

Die erste Steuereinrichtung 5 ist dabei so eingerichtet und ausgebildet, dass der erste und zweite Anteil an körnigem Fördergut werkzeuglos und per Hand einstellbar sind.

Aus den Figuren 1 bis 4 ist erkennbar, dass die erste Steuereinrichtung 5 einen Einlass 8 und zwei Auslässe 9, 10 aufweist.

Der Einlass 8 ist mit einer ersten Entnahmeleitung 7 der Sämaschine 1 verbunden, wobei ein erster Auslass 9 mit dem ersten Schar 2 und ein zweiter Auslass 10 mit den Andruckrollen 3, 4 verbunden ist.

Außerdem weist die erste Steuereinrichtung 5 eine Steuereinheit 11 auf, mit welcher ein erster Anteil an körnigem Fördergut an das erste Schar 2 und ein zweiter Anteil an körnigem Fördergut an die Andruckrollen 3, 4 verteilbar ist.

Mit Blick auf Figur 3 ist zuerkennen, dass die Steuereinheit 11 als Klappe ausgebildet ist, die die zwei Auslässe 9, 10 teilweise öffnen und teilweise schließen kann, sowie einen Auslass 9; 10 vollständig verschließen und den anderen Auslass 10; 9 vollständig öffnen kann. Dabei kann sowohl der eine Auslass als auch der andere Auslass vollständig geschlossen und vollständig geöffnet werden.

Zudem hat die erste Steuereinrichtung 5 eine Stelleinheit (nicht dargestellt), mit welcher die Steuereinheit 11 stufenlos verstellbar ist, sodass körniges Fördergut auf die zwei Auslässe 9, 10 der Steuereinrichtung 5 verteilbar ist. Die Stelleinheit kann als elektrischer Motor ausgebildet sein.

Des Weiteren zeigen die Figuren 1 bis 4, dass die Sämaschine 1 eine Ausgabeeinrichtung 12 zum Ausgeben von körnigem Fördergut an die Andruckrollen 3, 4 hat.

Dabei ist die Ausgabeeinrichtung 12 eingerichtet und ausgebildet, körniges Fördergut an einem Abgabepunkt 15 auszugeben, der in Arbeitsrichtung F der Sämaschine 1 vor oder hinter den Andruckrollen 3, 4 angeordnet ist.

Figuren 1 bis 4 zeigen, dass die Ausgabeeinrichtung 12 eine Führung 13 aufweist, innerhalb welcher körniges Fördergut zu erwähntem Abgabepunkt 15 führbar ist (vgl. insbesondere auch Figur 4). Die Führung ist als Rohr ausgebildet. Hierbei ist ein erstes Ende 14 der Führung 13 fluidkommunizierend mit einer zweiten Förderleitung 18 der Sämaschine 1 verbunden. Ein zweites Ende 15 der Führung 13 bildet einen Abgabepunkt 15, welcher körniges Fördergut an den Ackerboden, insbesondere in eine von dem zweiten Schar 26 gebildete Furche, abgibt.

Zudem umfasst gemäß den Figuren 1 bis 4 die Ausgabeeinrichtung 12 einen Luftabscheider 16, um einen Luftstrom aus einer Fördergutströmung zumindest teilweise abzutrennen. Eine Fördergutströmung umfasst Luft und Fördergut, wie Saatgut und/oder Dünger.

Außerdem ist der Luftabscheider 16 zwischen der Führung 13 und einer zweiten Förderleitung 18 der Sämaschine 1 angeordnet, wobei der Luftabscheider 16 als Zyklon-Abscheider mit einem Eingang und zwei Ausgängen ausgebildet ist.

Dabei leitet ein Ausgang abgetrennte Luft aus und ein anderer Ausgang führt körniges Fördergut in die Führung 13 der Ausgabeeinrichtung 12 ab, wobei der Eingang eine Fördergutströmung in den Luftabscheider 16 führt, und zwar aus einer zweiten Förderleitung 18.

Wie bereits angedeutet und in den Figuren 1 bis 4 zu erkennen, hat die Sämaschine 1 eine erste Förderleitung 17 für körniges Fördergut, wie Dünger, mit einem ersten Eingang und einem ersten Ausgang.

Der erste Eingang der ersten Förderleitung 17 ist an der ersten Steuereinrichtung 5 bzw. an dem ersten Auslass 9 der ersten Steuereinrichtung 5 angeordnet. Der erste Ausgang der ersten Förderleitung 17 ist am ersten Schar 2 angeordnet, um körniges Fördergut, wie Dünger, aus einem ersten Vorratsbehälter 6 der Sämaschine 1 zum ersten Schar 2 zu führen. Somit ist körniges Fördergut in einen Ackerboden, nämlich in eine von dem ersten Schar 2 gebildete Furche, einbringbar.

Ferner wurde ebenfalls schon erwähnt, dass die Sämaschine 1 eine zweite Förderleitung 18 mit einem zweiten Eingang und einem zweiten Ausgang hat.

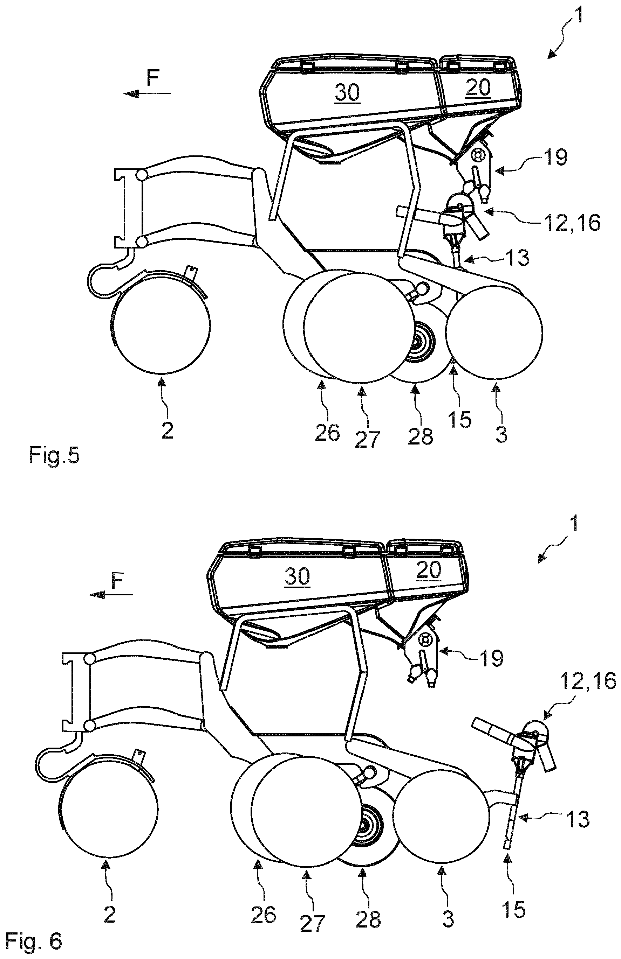

Der zweite Eingang der zweiten Förderleitung 18 ist an der ersten Steuereinrichtung 5 bzw. an dem zweiten Auslass 10 der ersten Steuereinrichtung 5 angeordnet. Der zweite Ausgang der zweiten Förderleitung 18 ist an der Ausgabeeinrichtung 12 angeordnet, um über die Ausgabeeinrichtung 12 körniges Fördergut, wie Dünger, aus einem ersten Vorratsbehälter 6 der Sämaschine 1 zu den Andruckrollen 3, 4 zu führen. Dadurch ist körniges Fördergut in einen Ackerboden einbringbar oder auf einen Ackerboden ablegbar. In Figur 6 ist zu sehen wie körniges Fördergut auf den Ackerboden ablegbar ist.

Ferner hat gemäß den Figuren 1 bis 4 die Sämaschine 1 eine zweite Steuereinrichtung 19 zum Abgeben von körnigem Fördergut aus einem zweiten Vorratsbehälter 20 der Sämaschine 1 an die Andruckrollen 3, 4. Dabei ist die zweite Steuereinrichtung 19 als steuerbare Y-Weiche ausgebildet.

Ferner ist die zweite Steuereinrichtung 19 eingerichtet und ausgebildet, einen dritten Anteil an körnigem Fördergut an die Ausgabeeinrichtung 12 sowie einen vierten Anteil an körnigem Fördergut an die Andruckrollen 3, 4 zu verteilen.

In diesem Zusammenhang kann der dritte Anteil zwischen 0 und 100 Prozent der maximal zur Verfügung gestellten Menge an körnigem Fördergut betragen, die mit einer zweiten Entnahmeleitung 21 aus einem zweiten Vorratsbehälter 20 der Sämaschine 1 gefördert wird. Der vierte Anteil kann zwischen 0 und 100 Prozent der maximal zur Verfügung gestellten Menge an körnigem Fördergut betragen, die mit einer zweiten Entnahmeleitung 21 aus einem zweiten Vorratsbehälter 20 der Sämaschine 1 gefördert wird.

Hierbei summieren sich der dritte und vierte Anteil zu 100 Prozent der maximal zur Verfügung gestellten Menge an körnigem Fördergut, die von einer zweiten Entnahmeleitung 21 aus einem zweiten Vorratsbehälter 20 der Sämaschine 1 gefördert wird.

Dabei ist die zweite Steuereinrichtung 19 so eingerichtet und ausgebildet, dass der dritte und vierte Anteil an körnigem Fördergut werkzeuglos und per Hand einstellbar sind.

Des Weiteren weist die zweite Steuereinrichtung 19 einen Einlass 22 und zwei Auslässe 23, 24 auf (vgl. insbesondere Figur 4), wobei der Einlass 22 mit einer zweiten Entnahmeleitung 21 der Sämaschine 1 verbunden ist. Im vorliegenden Fall ist die zweite Entnahmeleitung 21 sehr kurz, sodass die zweite Steuereinrichtung 19 direkt bzw. unmittelbar an dem zweiten Vorratsbehälter 20 angeordnet ist.

Zwar ist dies nicht dargestellt, dennoch ist ein erster Auslass 23 der zweiten Steuereinrichtung 19 mit der Ausgabeeinrichtung 12 der Sämaschine 1 und ein zweiter Auslass 24 mit den Andruckrollen 3, 4 verbunden.

Dabei hat die zweite Steuereinrichtung 19 eine Steuereinheit 25 (vgl. Figuren 2 bis 4), mit welcher ein dritter Anteil an körnigem Fördergut an die Ausgabeeinrichtung 12 und ein vierter Anteil an körnigem Fördergut an die Andruckrollen 3, 4 ausgebbar ist.

Die Steuereinheit 25 ist als Klappe ausgebildet, die die zwei Auslässe 23, 24 teilweise öffnen und teilweise schließen kann, sowie einen Auslass 23 vollständig verschließen und den anderen Auslass 24 vollständig öffnen kann. Dabei kann sowohl der eine Auslass als auch der andere Auslass vollständig geschlossen und vollständig geöffnet werden. Somit ist Fördergut in unterschiedlichen Anteilen auf die Auslässe 23, 24 verteilbar.

In den Figuren nicht zu erkennen, dass die zweite Steuereinrichtung 19 eine Stelleinheit umfasst, mit welcher die Steuereinheit 21 stufenlos verstellbar ist, sodass körniges Fördergut auf die zwei Auslässe 23, 24 der zweiten Steuereinrichtung 19 verteilbar ist. Die Stelleinheit ist als elektrischer Motor ausgebildet.

Des Weiteren zeigen alle Figuren, dass die Sämaschine 1 einen ersten Vorratsbehälter 6 für körniges Fördergut, wie Mineraldünger, aufweist, der in Arbeitsrichtung F vor und/oder oberhalb des ersten Schars 2 angeordnet ist.

Zudem kann die Sämaschine 1 eine erste Dosiereinrichtung (nicht dargestellt) zum dosierten Ausleiten von körnigem Fördergut aus dem ersten Vorratsbehälter 6 in eine erste Entnahmeleitung 7 der Sämaschine 1.

Wie bereits mehrfach angedeutet, hat die Sämaschine 1 eine erste Entnahmeleitung 7, die mit dem ersten Vorratsbehälter 6 verbunden ist. Zudem hat die Sämaschine 1 eine zweite Entnahmeleitung 21, die mit einem zweiten Vorratsbehälter 20 der Sämaschine 1 verbunden ist. Demgemäß hat also die Sämaschine 1 auch einen zweiten Vorratsbehälter 20 für Mikrogranulat wie z. B. Mikronährstoffe, Insektizide und Schneckenkorn, der in Arbeitsrichtung F vor und/oder oberhalb der Andruckrollen 3, 4 angeordnet ist.

Ferner hat die Sämaschine 1 eine zweite Dosiereinrichtung (bei der zweiten Steuereinrichtung) zum dosierten Ausleiten von körnigem Fördergut aus dem zweiten Vorratsbehälter 20.

Zudem umfasst die Sämaschine 1 ein zweites Schar 26, wie z. B. ein Säschar, zum Bilden einer Furche, wie einer Säfurche, und zum Einbringen von körnigem Fördergut, wie Saatgut, in einen Ackerboden. Das zweite Schar 26 ist in Arbeitsrichtung F der Sämaschine 1 hinter dem ersten Schar 2 angeordnet. Oberhalb des zweiten Schars 26 ist ein dritter Vorratsbehälter 30 für Saatgut angeordnet, dessen Inhalt an das zweite Schar 26 förderbar ist. Hierzu kann eine nicht dargestellte Vereinzelungsvorrichtung vorgesehen sein.

Zusätzlich dazu umfasst die Sämaschine 1 eine Tragrolle 27 und eine Fangrolle 28.

Dabei ist in Arbeitsrichtung F der Sämaschine 1 zumindest teilweise hinter und/oder zumindest teilweise neben dem zweiten Schar 26 die Tragrolle 27 angeordnet ist.

Figuren 5 und 6 zeigen eine Gegenüberstellung zweier Varianten der Sämaschine 1 aus Figuren 1 bis 4 betreffend die Ausgabeeinrichtung 12 der Sämaschine 1.

Genau genommen wird betreffend die Figuren 1 bis 4 ausgeführt, dass die Ausgabeeinrichtung 12 eingerichtet und ausgebildet ist, körniges Fördergut in Arbeitsrichtung F der Sämaschine 1 vor die Andruckrollen 3, 4 oder in Arbeitsrichtung F der Sämaschine 1 hinter die Andruckrollen 3, 4 auszubringen.

Exakter geschildert, ist gemäß Figuren 5 bis 8 die Ausgabeeinrichtung 12 veränderbar oder drehbar ausgebildet.

Dies bewirkt, dass der Abgabepunkt 15 für körniges Fördergut von einer Position in Arbeitsrichtung F der Sämaschine 1 vor den Andruckrollen 3, 4 (vgl. Figur 5) auf eine Position in Arbeitsrichtung F der Sämaschine 1 hinter die Andruckrollen 3, 4 (vgl. Figur 6) verändert werden kann. Dies kann auch umgekehrt erfolgen.

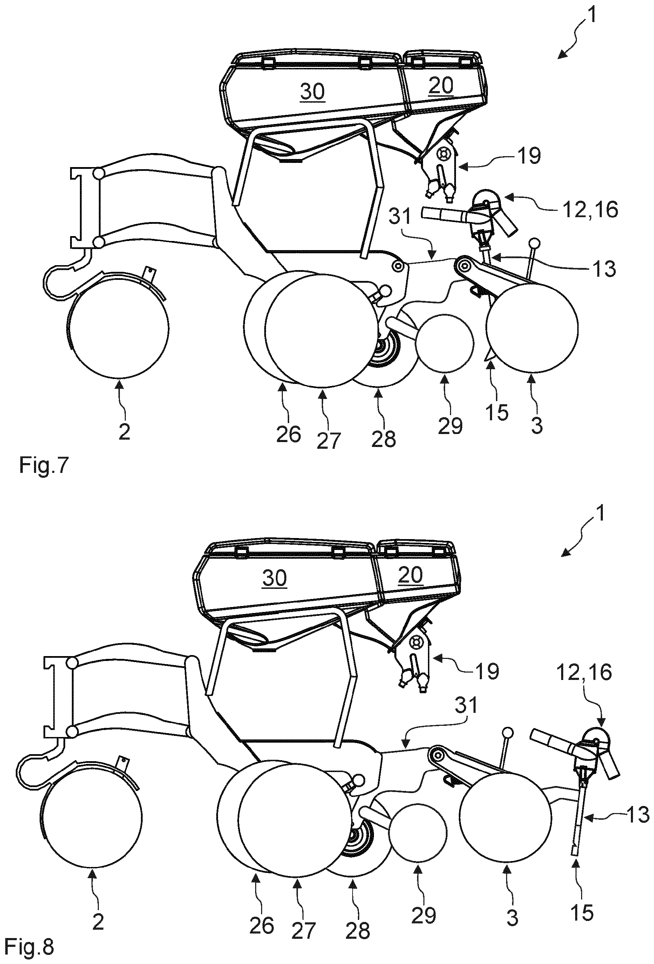

Figuren 7 und 8 zeigen ein weiteres Ausführungsbeispiel der Sämaschine 1 aus den Figuren 1 bis 4, ebenfalls in Gegenüberstellung zweier Varianten betreffend die Ausgabeeinrichtung 12.

Dabei umfasst die Sämaschine 1 zusätzlich einen Scheibenzustreicher 29, der über ein Verbindungsgestell 31 an der Sämaschine 1 angebunden ist. Dabei ist in Arbeitsrichtung F der Sämaschine 1 hinter der Tragrolle 27 die Fangrolle 28 angeordnet, wobei in Arbeitsrichtung F der Sämaschine 1 hinter der Fangrolle 28 der Scheibenzustreicher 29 angeordnet ist.

Außerdem sind in Arbeitsrichtung F der Sämaschine 1 hinter dem Scheibenzustreicher 29 oder hinter der Fangrolle 28 die Andruckrollen 3, 4 angeordnet.

### Bezugszeichenliste

| | | | |
|---|---|---|---|
| 1 | Sämaschine | 17 | erste Förderleitung |
| 2 | erstes Schar | 18 | zweite Förderleitung |
| 3 | Andruckrolle | 19 | zweite Steuereinrichtung |
| 4 | Andruckrolle | 20 | zweiter Vorratsbehälter |
| 5 | erste Steuereinrichtung | 21 | zweite Entnahmeleitung |
| 6 | erster Vorratsbehälter | 22 | Einlass |
| 7 | erste Entnahmeleitung | 23 | erster Auslass |
| 8 | Einlass | 24 | zweiter Auslass |
| 9 | erster Auslass | 25 | Steuereinheit |
| 10 | zweiter Auslass | 26 | zweites Schar |
| 11 | Steuereinheit | 27 | Tragrolle |
| 12 | Ausgabeeinrichtung | 28 | Fangrolle |
| 13 | Führung | 29 | Scheibenzustreicher |
| 14 | erstes Ende der Führung | 30 | dritter Vorratsbehälter |
| 15 | zweites Ende der Führung / Abgabepunkt | 31 | Verbindungsgestell |
| | | F | Arbeitsrichtung |
| 16 | Luftabscheider | | |

## Patentansprüche

1. Sämaschine (1) zum Ausbringen von körnigem Fördergut aufweisend:
- ein erstes Schar (2) zum Bilden einer Furche und zum Einbringen von körnigem Fördergut in einen Ackerboden,
- wenigstens eine Andruckrolle (3, 4) zum Schließen der gebildeten Furche, und
- eine erste Steuereinrichtung (5) zum Verteilen von körnigem Fördergut aus einem ersten Vorratsbehälter (6) der Sämaschine (1) an das erste Schar (2) und an die wenigstens eine Andruckrolle (3, 4), wobei der erste Vorratsbehälter (6) in Arbeitsrichtung (F) vor dem ersten Schar (2) angeordnet ist.

2. Sämaschine nach Anspruch 1,
- wobei die erste Steuereinrichtung (5) eingerichtet und ausgebildet ist, einen ersten Anteil an körnigem Fördergut an das erste Schar (2) und einen zweiten Anteil an körnigem Fördergut an die wenigstens eine Andruckrolle (3, 4) zu verteilen.

3. Sämaschine nach Anspruch 1 oder 2,
- wobei die erste Steuereinrichtung (5) so eingerichtet und ausgebildet ist, dass der erste und zweite Anteil an körnigem Fördergut werkzeuglos und/oder und per Hand einstellbar sind.

4. Sämaschine nach Anspruch 2 oder 3,
- wobei die erste Steuereinrichtung (5) einen Einlass (8) und zwei Auslässe (9, 10) aufweist,
- wobei der Einlass (8) mit einer ersten Entnahmeleitung (7) der Sämaschine (1) verbindbar ist, und
- wobei ein erster Auslass (9) mit dem ersten Schar (2) und ein zweiter Auslass (10) mit der wenigstens einen Andruckrolle (3, 4) verbunden ist.

5. Sämaschine nach einem der vorangehenden Ansprüche,
- wobei die erste Steuereinrichtung (5) eine Steuereinheit (11) aufweist, mit welcher ein erster Anteil an körnigem Fördergut an das erste Schar (2) und ein zweiter Anteil an körnigem Fördergut an die wenigstens eine Andruckrolle (3, 4) verteilbar ist, und
- wobei die Steuereinheit (11) als Klappe ausgebildet ist, die die zwei Auslässe (9, 10) teilweise öffnen und teilweise schließen kann, sowie einen Auslass (9; 10) vollständig verschließen und den anderen Auslass (10; 9) vollständig öffnen kann.

6. Sämaschine nach einem der vorangehenden Ansprüche,
- wobei die Sämaschine (1) eine Ausgabeeinrichtung (12) zum Ausgeben von körnigem Fördergut an die wenigstens eine Andruckrolle (3, 4) aufweist, und
- wobei die Ausgabeeinrichtung (12) eingerichtet und ausgebildet ist, körniges Fördergut an einem Abgabepunkt (15) auszugeben, der in Arbeitsrichtung (F) der Sämaschine (1) vor oder hinter der wenigstens eine Andruckrolle (3, 4) angeordnet ist.

7. Sämaschine nach einem der vorangehenden Ansprüche,
- wobei die Sämaschine (1) eine erste Förderleitung (17) für körniges Fördergut mit einem ersten Eingang und einem ersten Ausgang aufweist,
- wobei der erste Eingang der ersten Förderleitung (17) an der ersten Steuereinrichtung (5) oder an einem ersten Auslass (9) der ersten Steuereinrichtung (5) angeordnet ist, und
- wobei der erste Ausgang der ersten Förderleitung (17) am ersten Schar (2) angeordnet ist, um körniges Fördergut aus einem ersten Vorratsbehälter (6) der Sämaschine (1) zum ersten Schar (2) zu führen.

8. Sämaschine nach einem der vorangehenden Ansprüche,
- wobei die Sämaschine (1) eine zweite Förderleitung (18) mit einem zweiten Eingang und einem zweiten Ausgang aufweist,
- wobei der zweite Eingang der zweiten Förderleitung (18) an der ersten Steuereinrichtung (5) oder an einem zweiten Auslass (10) der ersten Steuereinrichtung (5) angeordnet ist, und
- wobei der zweite Ausgang der zweiten Förderleitung (18) an einer Ausgabeeinrichtung (12) der Sämaschine (1) angeordnet ist, um über die Ausgabeeinrichtung (12) körniges Fördergut aus einem ersten Vorratsbehälter (6) der Sämaschine (1) zur wenigstens einen Andruckrolle (3, 4) zu führen.

9. Sämaschine nach einem der vorangehenden Ansprüche,
- wobei die Sämaschine (1) eine zweite Steuereinrichtung (19) zum Abgeben von körnigem Fördergut aus einem zweiten Vorratsbehälter (20) der Sämaschine (1) an die wenigstens eine Andruckrolle (3, 4) aufweist,
- wobei die zweite Steuereinrichtung (19) eingerichtet und ausgebildet ist, einen dritten Anteil an körnigem Fördergut an eine Ausgabeeinrichtung (12) der Sämaschine (1) zu verteilen,
- wobei die zweite Steuereinrichtung (19) eingerichtet und ausgebildet ist, einen vierten Anteil an körnigem Fördergut an die wenigstens eine Andruckrolle (3, 4) zu verteilen, und
- wobei die zweite Steuereinrichtung (19) so eingerichtet und ausgebildet, dass der dritte und vierte Anteil an körnigem Fördergut werkzeuglos und/oder und per Hand einstellbar sind.
